# EUROPÄISCHE PATENTSCHRIFT

(11) **EP 2 019 930 B1**
(45) Veröffentlichungstag und Bekanntmachung des Hinweises auf die Patenterteilung: **13.07.2011**
(21) Anmeldenummer: 07764336.9
(22) Anmeldetag: 22.05.2007
(51) Int. Cl.: F16C 33/38

(54) **WÄLZLAGER MIT REDUZIERTER KÄFIGTASCHENLUFT**
ROLLING ELEMENT BEARING WITH REDUCED CAGE POCKET CLEARANCE
PALIER À ROULEMENT DANS LEQUEL LA COUCHE D'AIR SE FORMANT ENTRE LES CORPS DE ROULEMENT ET LES POCHES DE CAGE EST RÉDUITE

(30) Priorität: 24.05.2006 DE 102006024375
(43) Veröffentlichungstag der Anmeldung: 04.02.2009
(73) Patentinhaber: Schaeffler Technologies GmbH & Co. KG, 91074 Herzogenaurach (DE)
(72) Erfinder: PECHER, Alfred, 97488 Stadtlauringen (DE); BYWALEZ, Karl, 97422 Schweinfurt (DE); SCHLEIFENBAUM, Joachim, 97464 Niederwerrn (DE); VAN DER KNOKKE, Henri, 97464 Niederwerrn (DE); FUCHS, Manfred, 97503 Gädheim (DE)
(86) Internationale Anmeldenummer: PCT/DE2007/000925
(87) Internationale Veröffentlichungsnummer: WO 2007/134592

(56) Entgegenhaltungen:
- EP-A- 1 231 394
- EP-A- 1 653 095
- DE-A- 1 903 578
- DE-A1- 1 903 578
- US-A- 2 591 160
- US-A- 3 938 866
- US-A- 5 394 284

## Beschreibung

**Gebiet der Erfindung** Die Erfindung betrifft ein Wälzlager mit einem Käfig zur Führung der Wälzkörper.

Wälzlager verursachen in bestimmten Betriebzuständen ein erhöhtes Laufgeräusch, welches in vielen Anwendungen störend ist oder sogar deren Nutzung ausschließt. Bei Wälzlagern mit einem Käfig aus Blech oder Hartgewebe zur Führung der Wälzkörper sind die Geräusche insbesondere durch ein Erregen des Käfigs durch die Wälzkörper bedingt.

Aus der DE 197 81 320 B4 ist ein geräuschreduziertes Wälzlager mit einem Laufring bekannt, der als zusammengesetzter Hohlring ausgebildet ist. Der Hohlring besteht aus einem ersten Ringteil, welches mit den Wälzkörpern in Kontakt steht, und einem zweiten Ringteil, der das erste Ringteil umschließt. Zwischen den Ringteilen ist ein Spalt ausgebildet, der mit Öl oder einer anderen Flüssigkeit gefüllt ist. Die Laufbahn der ersten Ringteiles weicht durch eine oder mehrere elastische Laufbahnwölbungen abschnittsweise von der Kreisform ab. Zu jeden Zeitpunkt sind einige Wälzkörper vorgespannt, wodurch die gelagerte Welle ebenfalls eine radiale Vorspannung erhält. Die Welle hat somit nur eine geringe Möglichkeit zur Eigenbewegung, sodass eine Geräuschentwicklung reduziert ist. Nachteilig an dieser Lösung ist der hohe Aufwand, der für die Montage des mit Flüssigkeit gefüllten Spaltes notwendig ist. Die Flüssigkeit muss unter Druck stehen, wofür entsprechende Maßnahmen zur Abdichtung erforderlich sind. Weiterhin ist nachteilig, dass aufgrund der Vorspannung die Rollreibung der Wälzkörper auf den Laufringen erhöht ist. Des Weiteren ist das durch das Zusammenspiel zwischen dem Käfig und den Wälzkörpern entstehende Geräusch nur geringfügig gedämpft.

Zur Geräuschreduzierung werden, wie beispielsweise aus der EP 1 083 353 A2 bekannt ist, auch spezielle Fette eingesetzt, welche eine dämpfende Wirkung zeigen. Allerdings lassen sich diese Fette aufgrund ihren geringen Temperaturbeständigkeit nicht bei höheren Lagertemperaturen verwenden.

Aus der DE1903578 A ist ein Wälzlager nach dem Oberbegriff des Anspruchs 1 bekannt.

Käfige in Wälzlagern nach dem Stand der Technik zeigen das Problem, in bestimmten Betriebszuständen regelmäßig so durch die Wälzkörper angeregt werden, dass sie außer einer funktionsmäßigen Rotation auch Schwingungen insbesondere in radialer Richtung ausführen. Sobald ein Wälzlager einen solchen Betriebszustand erreicht hat, erzeugt es ein permanentes Betriebsgeräusch, wobei das Schwingen des Käfigs hierfür den größten Anteil liefert. Das Schwingen des Käfigs kann sich auf weitere Teile des Wälzlagers und der Maschine übertragen, wodurch ein erhöhter Verschleiß eintreten kann.

Die Aufgabe der vorliegenden Erfindung besteht somit darin, ein Wälzlager mit einem Käfig bereitzustellen, dessen Betriebsgeräusch durch eine einfach zu realisierende Maßnahme gesenkt ist, ohne dass die Rollreibung der Wälzkörper spürbar gesteigert wird.

Diese Aufgabe wird gelöst durch ein Wälzlager gemäß dem beigefügten Anspruch 1.

Die Erfindung geht von der Erkenntnis aus, dass das geräuschverursachende Schwingen des Käfigs u. a. durch ein zu großes Spiel der Wälzkörper in den Käfigtaschen bedingt ist. Hierbei ist insbesondere das Spiel der Wälzkörper in den Käfigtaschen in axialer Richtung bezogen auf das Wälzlager von Bedeutung. Das Spiel der Wälzkörper in den Käfigtaschen bewirkt eine Luftschicht zwischen den Wälzkörpern und den Käfigtaschen, welche auch als Käfigtaschenluft bezeichnet wird.

Bei Wälzlagern gemäß dem Stand der Technik bildet sich üblicherweise eine Käfigtaschenluft in axialer Richtung von etwa 0,2 Millimeter aus. Dieser Wert gilt für Wälzlager vieler Baugrößen, insbesondere für Kugellager. Insofern sich in dem Spiel zwischen den Wälzkörpern und den Käfigtaschen Flächenabschnitte der Wälzkörper und der Käfigtaschen gegenüberstehen und ungehindert aufeinander einwirken können, wird sich eine Käfigtaschenluft in der Weite des Spieles zwischen den Wälzkörpern und den Käfigtaschen ausbilden. Dies ist bei den Standardbauformen von Wälzlagern, insbesondere von den vorgenannten Kugellagern, in der Regel der Fall. In dem Bereich der Käfigtaschenluft kann auch Schmiermittel vorhanden sein.

Wesentlich für die Erfindung ist zunächst, dass die Wälzkörper, beispielsweise Kugeln, derart mit einem Spiel in axialer Richtung in den Käfigtaschen des Käfigs geführt sind, dass eine Käfigtaschenluft in axialer Richtung gebildet ist, die zumindest bei mehreren der Wälzkörper, vorzugsweise bei allen Wälzkörpern, einen Wert aus einem Bereich zwischen 0,07 Millimeter und 0,17 Millimeter aufweist.

Ein besonderer Vorteil der Erfindung besteht darin, dass durch eine einfach zu realisierende konstruktive Veränderung eine weitestgehende Reduktion der im Bereich des Käfigs eines Wälzlagers entstehenden Geräusche erzielt wird. Es bedarf keiner zusätzlichen Bauteile oder konstruktiver Ergänzungen, welche den Aufwand für die Herstellung eines erfindungsgemäßen Wälzlagers erhöhen würden.

Bei einem erfindungsgemäßen Wälzlager kommt es nicht zum geräuschverursachenden Schwingen des Käfigs oder zumindest zu einer deutlichen Geräuschreduktion, da die Käfigtaschenluft in axialer Richtung verkleinert ist. Hierdurch wird ein Schwingen des Käfigs insbesondere in radialer Richtung verhindert.

Die erfindungsgemäße Ausführung der Käfigtaschenluft in axialer Richtung im Bereich von 0,07 Millimeter bis 0,17 Millimeter verhindert das geräuschverursachende Schwingen des Käfigs, wobei eine reibungsarme Rollbewegung der Wälzkörper in den Käfigtaschen gewährleistet ist.

Jegliche Käfigtaschenform, z. B. eine Kalottenform, eine Kastenform oder eine Rahmenform, bewirkt eine axiale Führung der Wälzkörper, wobei die Führung ein Spiel erfordert und sich daher eine Käfigtaschenluft in axialer Richtung ausbilden kann. Erfindungsgemäß weist die Käfigtaschenluft in mehreren der Käfigtaschen das angegebene Maß - im Rahmen üblicher Toleranzen - auf. Bevorzugt weist die Käfigtaschenluft in allen Käfigtaschen des Wälzlagers das angegebene Maß - im Rahmen üblicher Toleranzen - auf.

Bei einer besonders bevorzugten Ausführungsform weist die Käfigtaschenluft in axialer Richtung einen Wert im Bereich von 0,09 Millimeter bis 0,11 Millimeter auf, da dieses Maß ein Optimum darstellt.

Die erfindungsgemäße Ausführung der Käfigtaschenluft in axialer Richtung mit einem Wert im Bereich von 0,07 Millimeter bis 0,17 Millimeter ist auch weitgehend unabhängig von der Größe des Wälzlagers, da das absolute Maß des Radius der Wälzkörper und das absolute Maß des davon abhängigen Radius der Käfigtaschen kaum einen Einfluss auf das durch die Erfindung gelöste Problem des Schwingens des Käfigs haben.

Die Käfigtaschenluft in radialer Richtung bezogen auf das Wälzlager ist ebenfalls gegenüber dem aus dem Stand der Technik bekannten Maß verkleinert. Insbesondere steht die (verkleinerte) radiale Käfigtaschenluft in einer geometrischen Abhängigkeit zur (verkleinerten) axialen Käfigtaschenluft. Die Käfigtaschenluft in zumindest mehreren der Käfigtaschen weist erfindungsgemäß einen Wert zwischen 0,3 Millimeter und 0,6 Millimeter in radialer Richtung auf. Besonders bevorzugt beträgt sie zwischen 0,35 Millimeter und 0,45 Millimeter.

Erfindungsgemäß sind das Wälzlager als Kugellager und die Wälzkörper als Kugeln ausbildet, wobei insbesondere die Kugeln einen Durchmesser Dw mit einem Wert aus einem Bereich zwischen 5mm und 25 mm aufweisen.

Weitere Vorteile, Einzelheiten und Weiterbildungen der Erfindung ergeben sich aus der nachfolgenden Beschreibung mehrerer Ausführungsformen, unter Bezugnahme auf die Zeichnungen. Es zeigen:
Fig. 1 zwei Ansichten eines Käfigs eines erfindungsgemäßen Wälzlagers;
Fig. 2 ein Diagramm zur Darstellung der Abhängigkeit des Käfiggeräusches von der axialen und der radialen Käfigtaschenluft.

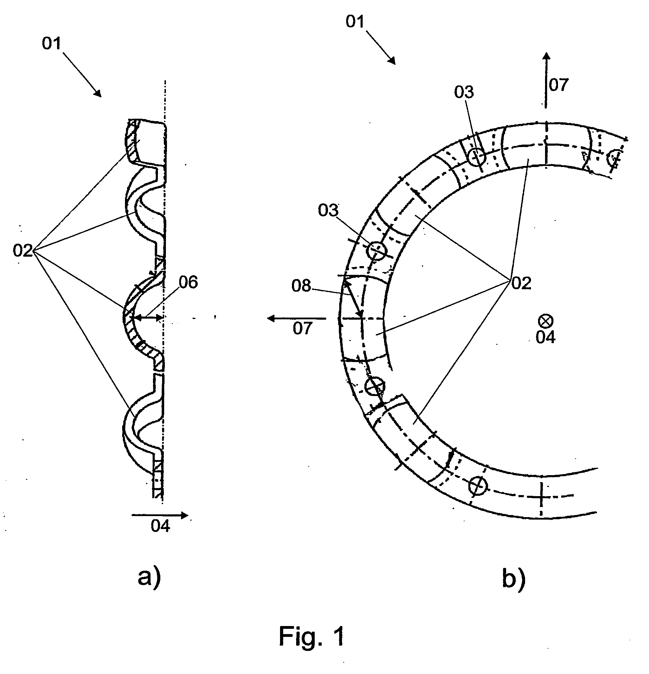

Fig. 1 zeigt zwei Ansichten eines Käfigs 01 eines erfindungsgemäßen Wälzlagers. Abbildung a) der Fig. 1 zeigt eine seitliche Schnittansicht einen Abschnittes mit vier Taschen einer Käfighälfte des Käfigs 01. Abbildung b) der Fig. 1 zeigt eine Draufsicht auf den Abschnitt mit vier Taschen der Käfighälfte des Käfigs 01.

Die in Fig. 1 gezeigte Hälfte des Käfig 01 dient der Führung von acht Kugeln (nicht gezeigt), die als Wälzkörper in einem Kugellager fungieren. Der Käfig 01 weist hierfür acht kalottenförmige Käfigtaschen 02 auf. Zwischen den Käfigtaschen 02 sind Löcher 03 im Käfig 01 für die Durchführung von Nieten oder anderen Verbindungsmitteln (nicht gezeigt) angeordnet. Für die Montage des Kugellagers werden die acht Kugeln zwischen den beiden Hälften des Käfigs angeordnet und die beiden Hälften des Käfigs 01 mit acht Nieten miteinander verbunden.

Die acht Käfigtaschen 02 sind gleichmäßig über den ringförmigen Käfig 01 verteilt. Folglich weisen die Mittelpunkte der Käfigtaschen 02 jeweils einen Winkel von 45 Grad zueinander auf. Die kalottenförmigen Käfigtaschen 02 sind geringfügig größer als die Kugeln ausgeführt, sodass die Kugeln mit einem Spiel in den Käfigtaschen 02 geführt werden. Das Spiel ermöglicht ein freies Rollen der Kugeln in dem Käfig 01. Des Weiteren befindet sich vorzugsweise ein Schmiermittel in den Zwischenräumen zwischen den Kugeln und den Käfigtaschen 02, sodass die Kugeln reibungsarm in den Käfigtaschen 02 rollen können.

Die Kalottenform der Käfigtaschen 02 weist in Richtung 04 der Achse des Wälzlagers einen axialen Radius 06 auf. Der sich daraus ergebende axiale Durchmesser ist größer als der Durchmesser der Kugeln ausgeführt. Die Differenz zwischen diesen beiden Durchmessern beträgt bei der bevorzugten Ausführungsform 0,1 mm und gleicht der Käfigtaschenluft in der axialen Richtung 04.

Die Kalottenform der Käfigtaschen 02 weist nicht in alle Richtungen einen gleichen Radius auf, sondern entspricht näherungsweise der Form eines geschnittenen Ellipsoids. Das Ellipsoid weist in den Hauptachsen unterschiedliche Radien auf. In einer radialen Richtung 07 bezogen auf das Wälzlager wird die Führung der Kugeln im Käfig 01 durch einen radialen Radius 08 der Käfigtaschen 02 bestimmt. Der radiale Radius 08 ist derart größer als der Radius der Kugeln ausgeführt, dass sich vorzugsweise eine Käfigtaschenluft mit einem Wert von 0,4 mm in der radialen Richtung 07 ausbildet.

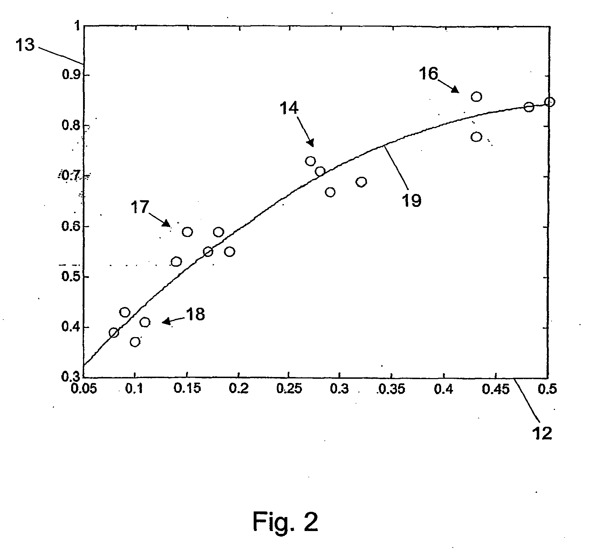

Fig. 2 zeigt ein Diagramm zur Darstellung der Abhängigkeit des Wälzlagergeräusches von der axialen und der radialen Käfigtaschenluft. Auf einer x-Achse 12 des Diagramms ist der Wert der axialen Käfigtaschenluft in Millimeter aufgetragen. Auf einer y-Achse 13 des Diagramms ist der Wert der radialen Käfigtaschenluft in Millimeter aufgetragen. Die im Diagramm veranschaulichten Messungen wurden für ein Kugellager des Typs 6310 gemäß DIN 625-1 vorgenommen. Da die Ursachen für die Geräuschentwicklung kaum von den absoluten Abmessungen des Käfigs und der Wälzkörper abhängen, sind die gezeigten Messergebnisse auf andere Wälzlagertypen prinzipiell übertragbar.

Im Diagramm sind siebzehn Messergebnisse eingetragen, die jeweils durch einen kleinen Kreis dargestellt sind. Die untersuchten Wälzlager lassen sich in vier Gruppen einteilen. Eine erste Gruppe 14 von vier Wälzlagern entspricht dem Stand der Technik, wobei diese Wälzlager das bekannte Betriebsgeräusch aufweisen. Die axiale Käfigtaschenluft dieser Wälzlager beträgt etwa 0,25 Millimeter bis 0,3 Millimeter. Die radiale Käfigtaschenluft beträgt etwa 0,7 Millimeter.

Wälzlager mit einer noch größeren axialen und radialen Käfigtaschenluft erzeugen ein noch stärkeres Betriebsgeräusch. Bei einer zweiten Gruppe 16 von vier Wälzlagern beträgt die axiale Käfigtaschenluft etwa 0,4 Millimeter bis 0,5 Millimeter und die radiale Käfigtaschenluft etwa 0,8 Millimeter. Diese Wälzlager erzeugen ein lautes Käfiggeräusch.

Bei Wälzlagern mit einer verringerten axialen und radialen Käfigtaschenluft ist das Betriebsgeräusch reduziert. Eine dritte Gruppe 17 von fünf Wälzlagern weist eine axiale Käfigtaschenluft von etwa 0,14 Millimeter bis 0,20 Millimeter und eine radiale Käfigtaschenluft von etwa 0,5 Millimeter bis 0,6 Millimeter auf. Diese Wälzlager erzeugen nur ein kleines Käfiggeräusch.

Eine vierte Gruppe 18 von vier erfindungsgemäßen Wälzlagern weist eine axiale Käfigtaschenluft von etwa 0,08 Millimeter bis 0,11 Millimeter und eine radiale Käfigtaschenluft von etwa 0,37 Millimeter bis 0,43 Millimeter auf. Die erfindungsgemäßen Wälzlager der vierten Gruppe 18 erzeugen kein messbares Betriebsgeräusch, welches vom Käfig herrührt.

Ein Graph 19 veranschaulicht den mit Hilfe einer Regression ermittelten mathematischen Zusammenhang zwischen der Dicke x der axialen Käfigtaschenluft und der Dicke y der radialen Käfigtaschenluft. Dieser Zusammenhang lässt sich genähert durch die Formel y = -2,2 * x² + 2,4 * x + 0,21 beschreiben.

### Bezugszeichenliste

- 01: Käfig
- 02: Käfigtaschen
- 03: Nietloch
- 04: axiale Richtung
- 05: -
- 06: axialer Radius der Käfigtaschen
- 07: radiale Richtung
- 08: radialer Radius der Käfigtaschen
- 09: -
- 10: -
- 11: -
- 12: x-Achse
- 13: y-Achse
- 14: erste Gruppe von Wälzlagern
- 15: -
- 16: zweite Gruppe von Wälzlagern
- 17: dritte Gruppe von Wälzlagern
- 18: vierte Gruppe von Wälzlagern
- 19: Graph

## Patentansprüche

1. Wälzlager mit Wälzkörpern und mit einem Radiallager-Käfig (01) mit Käfigtaschen (02) zur Führung der Wälzkörper, welche zumindest in axialer Richtung (04) des Wälzlagers mit einem axialen Spiel in den Käfigtaschen (02) geführt sind, wodurch eine axiale Käfigtaschen luft bereitgestellt ist, **dadurch gekennzeichnet, dass** die axiale Käfigischenluft in mehreren der Käfigtaschen (02) einen Wert in einem Bereich zwischen 0,07 Millimeter und 0,17 Millimeter aufweist,
dass alle Wälzkörper als gleichgroße Kugeln ausgebildet sind,
dass die Käfigtaschen (02) ellipsoidische Innenflächen besitzen dass die Dicke der axialen Käfigtaschenluft der Differenz zwischen dem Durchmesser des Ellipsoids In axialer Richtung (04) und den Durchmesser der Kugeln entspricht, und
dass die Wälzkörper in radialer Richtung (07) des Wälzlagers mit einem radialen Spiel in den Käfigtaschen (02) geführt sind, wodurch eine radlale Käfigtaschenluft bereitgestellt ist, die in den mehreren der Käfigtaschen (02) einen Wert zwischen 0,30 Millimeter und 0,60 Millimeter aufweist.

2. Wälzlager nach Anspruch 1, **dadurch gekennzeichnet, dass** der Käfig (01) aus Blech, Kunststoff, Messing oder Hartgewebe besteht.

3. Wälzlager nach Anspruch 1 oder Anspruch 2, **dadurch gekennzeichnet, dass** die radiale Käfigtaschenluft in einer geometrischen Abhängigkeit zur axialen Käfigtaschenluft steht.

4. Wälzlager nach Anspruch 1 oder 2, **dadurch gekennzeichnet, dass** die axiale Käfigtaschenluft in mehreren der Käfigtaschen (02) einen Wert zwischen 0,09 Millimeter und 0,11 Millimeter aufweist.

5. Wälzlager nach Anspruch 2 oder dem auf diesen rückbezogenen Anspruch 3, **dadurch gekennzeichnet, dass** die radiale Käfigtaschanluft In mehreren der Käfigtaschen (02) einen Wert zwischen 0,35 Milimeter und 0,45 Millimeter aufweist.

6. Wälzlager nach einem der Ansprüche 1 bis 5, **dadurch gekennzeichnet, dass** die axiale Käfigtaschenluft in allen Käfigtaschen (02) denselben Wert aufweist.

7. Wälzlager nach Anspruch 2 oder einem auf diesen rückgezogenen Anspruch, **dadurch**_**gekennzeichnet**, dass die radiale Käfigtaschenluft in allen Käfigtaschen (02) denselben Wert aufweist.

8. Wälzlager nach einem der Ansprüche 1 bis 6, **dadurch gekennzeichnet, dass** die Kugeln einen Kugeldurchmesser Dw mit einem Wert aus einem Bereich zwischen 5mm und 25 mm aufweisen.

9. Wälzlager nach einem der Ansprüche 1 bis 8, **dadurch gekennzeichnet, dass** der Käfig (01) einteilig oder mehrteilig ausgebildet ist, insbesondere aus zwei komplementären Käfighälften besteht, die an Verbindungsstellen (03) zwischen den einzelnen Käfigtaschen (02) mit Verbindungsmitteln verbunden sind.

## Claims

1. Rolling element bearing with rolling elements and with a radial-bearing cage (01) with cage pockets (02) for the guidance of the rolling elements which are guided in the cage pockets (02) with an axial play at least in the axial direction (04) of the rolling element bearing, with the result that an axial cage pocket clearance is provided, **characterized in that** the axial cage pocket clearance in a plurality of the cage pockets (02) has a value in a range of between 0.07 millimeters and 0.17 millimeters, **in that** all the rolling elements are designed as balls of equal size, **in that** the cage pockets (02) possess ellipsoidal inner surfaces, **in that** the thickness of the axial cage pocket clearance corresponds to the difference between the diameter of the ellipsoid in the axial direction (04) and the diameter of the balls, and **in that** the rolling elements are guided in the cage pockets (02) with a radial play in the radial direction (07) of the rolling element bearing, with the result that a radial cage pocket clearance is provided, which in a plurality of the cage pockets (02) has a value of between 0.30 millimeters and 0.60 millimeters.

2. Rolling element bearing according to Claim 1, **characterized in that** the cage (01) consists of sheet metal, plastic, brass or hard fabric.

3. Rolling element bearing according to Claim 1 or claim 2, **characterized in that** the radial cage pocket clearance is a geometric function of the axial cage pocket clearance.

4. Rolling element bearing according to Claim 1 or 2, **characterized in that** the axial cage pocket clearance in a plurality of the cage pockets (02) has a value of between 0.09 millimeters and 0.11 millimeters.

5. Rolling element bearing according to Claim 2 or Claim 3 referring back to this, **characterized in that** the radial cage pocket clearance in a plurality of the cage pockets (02) has a value of between 0.35 millimeters and 0.45 millimeters.

6. Rolling element bearing according to one of Claims 1 to 5, **characterized in that** the axial cage pocket clearance in all the cage pockets (02) has the same value.

7. Rolling element bearing according to Claim 2 or a claim referring back to this, **characterized in that** the radial cage pocket clearance in all the cage pockets (02) has the same value.

8. Rolling element bearing according to one of Claims 1 to 6, **characterized in that** the balls have a ball diameter Dw with a value from a range of between 5 mm and 25 mm.

9. Rolling element bearing according to one of Claims 1 to 8, **characterized in that** the cage (01) is formed in one piece or in the plurality of pieces, in particular consists of two complementary cage halves which are connected at connection points (03) between the individual cage pockets (02) by connection means.

## Revendications

1. Palier à roulement avec des corps de roulement et avec une cage de palier radial (01) comprenant des cavités de cage (02) pour guider les corps de roulement, lesquels sont guidés au moins dans la direction axiale (04) du palier à roulement avec un jeu axial dans les cavités de cage (02), de sorte qu'un entrefer de cavité de cage axial soit formé, **caractérisé en ce que** l'entrefer de cavité de cage axial présente dans plusieurs des cavités de cage (02) une valeur de l'ordre de 0,07 millimètre à 0,17 millimètre,
**en ce que** tous les corps de roulement sont réalisés sous forme de billes de même taille,
**en ce que** les cavités de cage (02) possèdent des surfaces internes ellipsoïdales,
**en ce que** l'épaisseur de l'entrefer de cavité de cage axial correspond à la différence entre le diamètre de l'ellipsoïde dans la direction axiale (04) et le diamètre des billes, et
**en ce que** les corps de roulement sont guidés dans la direction radiale (07) du palier à roulement avec un jeu radial dans les cavités de cage (02), de sorte qu'un entrefer de cavité de cage radial soit formé, lequel présente dans plusieurs des cavités de cage (02) une valeur de l'ordre de 0,30 millimètre à 0,60 millimètre.

2. Palier à roulement selon la revendication 1, **caractérisé en ce que** la cage (01) se compose de tôle, de plastique, de laiton ou de tissu dur.

3. Palier à roulement selon la revendication 1 ou la revendication 2, **caractérisé en ce que** l'entrefer de cavité de cage radial se trouve dans un état de dépendance géométrique par rapport à l'entrefer de cavité de cage axial.

4. Palier à roulement selon la revendication 1 ou 2, **caractérisé en ce que** l'entrefer de cavité de cage axial présente dans plusieurs des cavités de cage (02) une valeur de l'ordre de 0,09 millimètre à 0,11 millimètre.

5. Palier à roulement selon la revendication 2, ou la revendication 3 lorsqu'elle s'y rapporte, **caractérisé en ce que** l'entrefer de cavité de cage radial présente dans plusieurs des cavités de cage (02) une valeur de l'ordre de 0,35 millimètre à 0,45 millimètre.

6. Palier à roulement selon l'une quelconque des revendications 1 à 5, **caractérisé en ce que** l'entrefer de cavité de cage axial présente, dans toutes les cavités de cage (02), la même valeur.

7. Palier à roulement selon la revendication 2 ou l'une quelconque des revendications lorsqu'elles se rapportent à celle-ci, **caractérisé en ce que** l'entrefer de cavité de cage radial présente, dans toutes les cavités de cage (02), la même valeur.

8. Palier à roulement selon l'une quelconque des revendications 1 à 6, **caractérisé en ce que** les billes présentent un diamètre de bille Dw ayant une valeur de l'ordre de 5 mm à 25 mm.

9. Palier à roulement selon l'une quelconque des revendications 1 à 8, **caractérisé en ce que** la cage (01) est réalisée en une ou plusieurs parties, en particulier se compose de deux moitiés de cage complémentaires, qui sont connectées en des points de connexion (03) entre les cavités de cage individuelles (02) à des moyens de connexion.
